Europäisches Patentamt

European Patent Office

Office européen des brevets

(19)

(11) Publication number: **0 233 384**

A2

(12)

# EUROPEAN PATENT APPLICATION

(21) Application number: 86202232.4

(22) Date of filing: 10.12.86

(51) Int. Cl.4: **B01J 2/18** , B01J 2/04 , B01J 2/02

(30) Priority: 20.12.85 NL 8503518
25.01.86 NL 8600165

(43) Date of publication of application:
26.08.87 Bulletin 87/35

(84) Designated Contracting States:
AT BE DE ES FR GB GR IT NL SE

(71) Applicant: STAMICARBON B.V.
Mijnweg 1
NL-6167 AC Geleen(NL)

(72) Inventor: Schotman, André Jan
P.C. Hooftlaan 54
NL-1985 BK Driehuis(NL)
Inventor: Houtsmuller, Hugo Willem Adriaan
Krayenhofflaan 86
NL-1965 AG Heemskerk(NL)
Inventor: Dekker, Martinus
Verhammestrasse 1
NL-1964 TG Heemskerk(NL)
Inventor: Willems, Michael Hendrik
Nassaustrasse 9
NL-6166 BD Geleen(NL)
Inventor: Broekmate, Arend
Stationsstrasse 94
NL-6433 JR Heerlen(NL)
Inventor: Vermijs, Winfried Johannes
Wouterus
Debeyestrasse 5
NL-6164 BE Geleen(NL)

(74) Representative: Bleukx, Lucas Lodewijk Maria,
Ir. et al
OCTROOIBUREAU DSM Postbus 9
NL-6160 MA Geleen(NL)

(54) Process and device for distributing a liquid in a gaseous or vaporous medium.

(57) Process and device for distributing a liquid in a gaseous medium, in which process the liquid is introduced into a hollow body having a number of identical outlets, provided rotation-symmetrically relative to a vertical axis, and in which process an element is present in the hollow of the body, which element is at least partly in contact with the liquid and is moved up and down in a direction parallel to the vertical axis. At least the part of the body that is provided with outlets is moved up and down in a direction parallel to the vertical axis or the body is moved around the vertical axis. The frequency f of the movement of the body is equal to the product of a proportionality constant k and the quotient of the average flow rate of the liquid through the outlets of the body and the diameter d of an outlet, in which k is between 0.25 and 0.5, f is expressed in vibrations per second, v in metres per second and d in metres.

Fig. 1

## PROCESS AND DEVICE FOR DISTRIBUTING A LIQUID IN A GASEOUS OR VAPOROUS MEDIUM

The invention relates to a process for distributing a liquid in a gaseous medium, in which process the liquid is introduced into a hollow body having a number of identical outlets, provided rotation-symmetrically relative to a vertical axis, and in which process an element is present in the hollow of the body, which element is at least partly in contact with the liquid and is moved up and down in a direction parallel to the vertical axis.

More specifically the invention relates to the spraying of a melt or concentrated solution of substances which are cooled in and by the medium after the spraying and which solidify.

The invention is particularly suitable for the prilling of melts or solutions of, for instance, fertilizers to form drops and susbequently prills of substantially uniform size.

A liquid should in this connection be understood to mean also a substance not (entirely) in a liquid state, but which does behave like a liquid, for instance a suspension, dispersion or emulsion.

The invention also relates to a device for performing the process referred to in the opening part.

The process referred to in the opening part is known from the European patent application 0.033.717.

The disadvantageof the known process is the big distribution of the dimensions of the obtained prills. Big means in this context that the maximum deviation relative to the average diameter of prills is about plus or minus 50 %.

Applicant has found an improved process, which process is characterized in that at least the part of the body that is provided with outlets is moved up and down in a direction parallel to the vertical axis, the frequency f of said movement being equal to the pro duct of a proportionality constant k and the quotient of the average flow rate of the liquid through the outlets of the body and the diameter d of an outlet, in which k is between 0.25 and 0.5, f is expressed in vibrations per second, v in metres per second and d in meters.

An advantage of the prills obtained by applying the processes according to the invention is that in bulk storage there will be no separation according to particle size.

Another advantage of the process according to the invention is that also, as a result of a virtually uniform prill size, so-called bulk blends (mixtures of prills with different nutrient compositions) can be evenly sowed on a field or a meadow.

Moreover, with a uniform prill size, a uniform product is obtained in terms of mechanical properties, which is an advantage in the handling of the product. As a result product screens can be dispensed with.

It should be noted that on the ground of Rayleigh's equation for the formation of drops with a free jet an optimum result may theoretically be expected to be obtained with a k factor (as meant in the present application) of 0.22. The fact is that with k = 0.22 goes the natural frequency of the breaking of a free jet.

From US-A-2,968,833 (see column 8, lines 48-51) it is known to use a k-value between 0.1 and 0.25. The frequency(ies) of metion of the spraying device then being lower, consequently, that the natural frequency of the jet. According to the patent specification it becomes increasingly more difficult outside this range (to obtain a good result).

With a k-value between 0.25 and 0.5, so with frequencies above the natural frequency of the jet, the process according to the invention (surprisingly) produces very good results.

An embodiment of the invention is characterized in that the frequency of movement of the body and the element are equal to each other and in phase.

With this embodiment of the process according to the invention the best results have been obtained with respect to the distribution and the flexibility of operation.

An embodiment of the invention is characterized in that the body is moved round a vertical axis at a rotational frequency between 0.5 and 6 rev/s. As a result the drops are distributed over a larger plane so that the chance of the drops colliding with each other is reduced, which has a favourable effect on the prill size distribution.

Another embodiment of the process according to the invention is characterized in that the body is periodically moved in the horizontal plane. This movement may consists of a single vibration in one direction perpendicular to the vertical axis, or of a compound vibration consisting of two single vibrations according to two different directions in the horizontal plane.

In this way it is obtained that the droplets are distributed over a larger area, with a decreased chance of collision and less thermal load for the medium in which the liquid is distributed.

In another embodiment the element is moved in an additional way, which movement may consist of a rotation around the vertical axis, preferably with a speed of rotation between 0.5 and 3 rev/s., or of a periodical movement in the horizontal plane.

In this way, the forming of droplets is improved and especially the interrupting of the liquid jets is facilitated.

The invention also relates to a process for distributing a liquid in a gaseous medium, in which process the liquid is introduced into a hollow body having a number of identical outlets, provided rotation-symmetrically relative to a vertical axis, and in which process an element is present in the hollow of the body, which element is at least partly in contact with the liquid and is moved up and down in a direction parallel to the vertical axis, this process being characterized in that the body is moved around the vertical axis at a frequency f that is equal to the product of a proportionality constant k and the quotient of the average flow rate of the liquid through the outlets of the body and the diameter d of an outlet, k being between 0.25 and 0.5, f being expressed in vibrations per second, v in metres per second and d in metres.

It is believed that, owing to the movement of the element, the liquid reaches a state of vibration so that, after leaving the outlet(s) of the body, the drop(s) will have highly uniform volumes and hence the diameters of the prills obtained will show a substantially smaller spread than prills obtained by applying the known processes.

The drop size is decisive if the distribution of the liquid in the gaseous or vaporous medium takes place in an environment separated off from the open air, as is the case, for instance, in the spraying of a melt of a fertilizer in a prilling tower. The dimensions of such a prilling tower (in terms of height and diameter) are determined by the largest drops (or prills) that can be imagined to be produced, so prills of the desired average diameter increased by about three times the coefficient of variation of the prill diameter to be expected, because the largest drops, too, must be solidified virtually completely before touching the wall or the bottom of the prilling tower.

In the process according to the invention a 5% coefficient of variation of the average prill diamater has been realized. This means in actual practice, under further identical process conditions and process variables, a reduction of the height of the prilling tower by about 50% and a reduction of the diameter of the prilling tower by about 25% calculted on a prilling tower in which the known process is applied.

Using the process according to the invention in an existing prilling tower the average diameter of the prills can be increased by about 20% by applying an adapted distributing or spraying element without the largest drops touching the wall(s) or the bottom before their solidification. Larger prills are labour-saving for the farmers, because larger and consequently heavier prills can be sowed broader/wider.

A prilling tower to be newly built for urea (UR) prills having an average diameter of 2.2 mm must be about 65 metres height according to a known process using a rotating prilling bucket. In it a 25% coefficient of variation is started from.

In applying the process according to the invention a prilling tower with a height of 30 m will suffice, because a 5% coefficient of variation of the average prill diameter may be started from.

An advantage of the prills obtained by applying the process according to the invention in that in bulk storage there will be no separation according to particle size.

Another advantage of the orocess according to the invention is that also, as a result of a virtually uniform prill size, so-called bulk blends (mixtures of prills with different nutrient compositions), can be evenly sowed on a field or a meadow without segregation of the mixture during the sowing.

Moreover, with a uniform prill size, a uniform product is obtained in terms of mechanical properties, which is an advantage in the handling of the product.

A remarkable feature is the absence of so-called satellite prills between the prills obtained, which is indicative of the absence of fine drops formed in the known process and device for the spraying of liquid. As a result no product screens are required any longer. In the known process these fine particles must be recirculated and consequently dissolved also, which gives rise to extra production costs.

The invention also relates to a device for applying the process according to the invention.

The device according to the invention, comprises a hollow body having at least one liquid inlet and a number of liquid outlets, which are identical and have been provided rotation-symmetrically relative to a vertical axis in the wall of the body, and an element provided in the hollow of the body, the body and the element having a rotation-symmetrical shape, this device characterized in that the body and the element substantially are similar in shape and are positioned symmetrically relative to the vertical axis.

The body and the element may have a conical part with a bottom plate provided with outlets, the liquid being supplied through the hollow in the element.

This embodiment is especially usefull when no rotational movement around the vertical axis is applied. Thereby the body may be provided with a bottom plate that bulges outwards, thereby increasing the distribution area of the droplets.

In another embodiment there is used a conical part provided with outlets, the end of the conical part having the smaller diameter facing downwards.

In a device wherein the body is rotating around the vertical axis, there is obtained a very large distribution area.

In order to stabilize the flow of the liquid to be distributed near the outlets of the body and/or the element, a gauze shaped member is provided internally in the body, at some distance from and in the main parallel to the bottom section.

An embodiment of the device according to the invention is characterized in that the bottom portion of the body is provided with outwardly directed bulges, where the liquid outlets are provided. Thus a good laminar supply flow is achieved at the outlets and also the pulsations in the jet of liquid are influenced favourably.

The process according to the invention will now be explained in more detail, reference being made to the following experiments and the annexed drawings representing devices used in the experiments. In the drawings

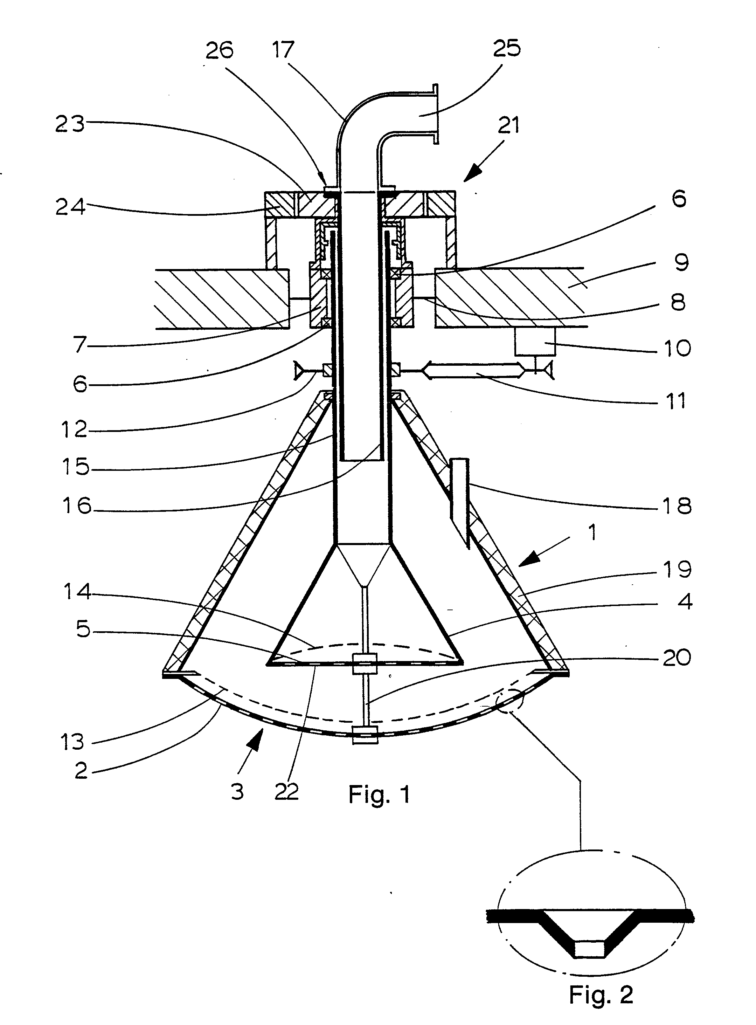

. Fig. 1 is a schematic representation of a first embodiment of a device according to the invention,

Fig. 2 is a detail of the device of Figure 1,

Fig. 3 is a schematic representation of a second embodiment of a device according to the invention, and

Fig. 4 is a representation of the axis system, wherein the z-axis is vertically directed and which is used as a reference system.

In figure 1, 1 is the body, of which bottom portion 3, provided with outlets 2, is convex. In the cavity of body 1 element 4 is present, which is provided with a bottom portion 5 provided with holes 22. Via pipes 15 body 1 is so supported by bearing 6 in bushing 7 as to be capable of rotation, the bushing in its turn being so connected by means of member 8 to a fixed part 9, for instance the upper floor of a prilling tower (not shown), as to be capable of flexible movements. 10 is a motor capable of making body 1 rotate by means of transmission 11 and pulley 12. Transmission 11 is suited to cope with slight displacements of body 1 in z-direction, a few millimetres at most. Feed pipe 16 is preferably made of a material having low adhesive properties, such as for instance PTFE. 21 is an electromagnetic vibration generator the movable portion 23 of which is fastened to pipe 15 and the fixed portion 24 to fixed part 9. with pipe 15 body 1 can be moved up and down. The bottom portion 5 of element 4 is connected with bottom portion 3 of body 1 by means of bar 20. The liquid to be sprayed is supplied through member 17, feed pipe 16 and through gauze-shaped member 14 and holes 22 to the cavity in body 1. To pipe 15 a bend 25 has been fitted by means of flanged joint 26. Bend 25 is connected to the process facility (not shown) with a flexible pipe (not shown).

At some distance, more or less conformal to the inner surface of bottom portion 3, a gauze-shaped member 13 has been applied. Thus the rotation of body 1 is well conveyed, at least near outlets 2, to the liquid to be sprayed, which has a favourable effect on the spraying.

Gauze-shaped member 14 serves to filter the liquid to be sprayed. The additional advantage thus achieved is that the supply of liquid to be sprayed is well spread over the surface of bottom portion 3. 19 is insulating material to prevent any local cooling and solidification of the liquid to be sprayed. By means of ventilating tube 18 the cavity of the body is connected with the space into which the liquid is sprayed.

The movements of the body/element have been generated by electromagnetic vibration generators with controllable frequencies. The acceleration is not mentioned separately, because it was always (except where indicated otherwise) between 0.5 and 25 m/s². Instead the electric power requirement is indicated, which is otherwise related to the acceleration that occurred.

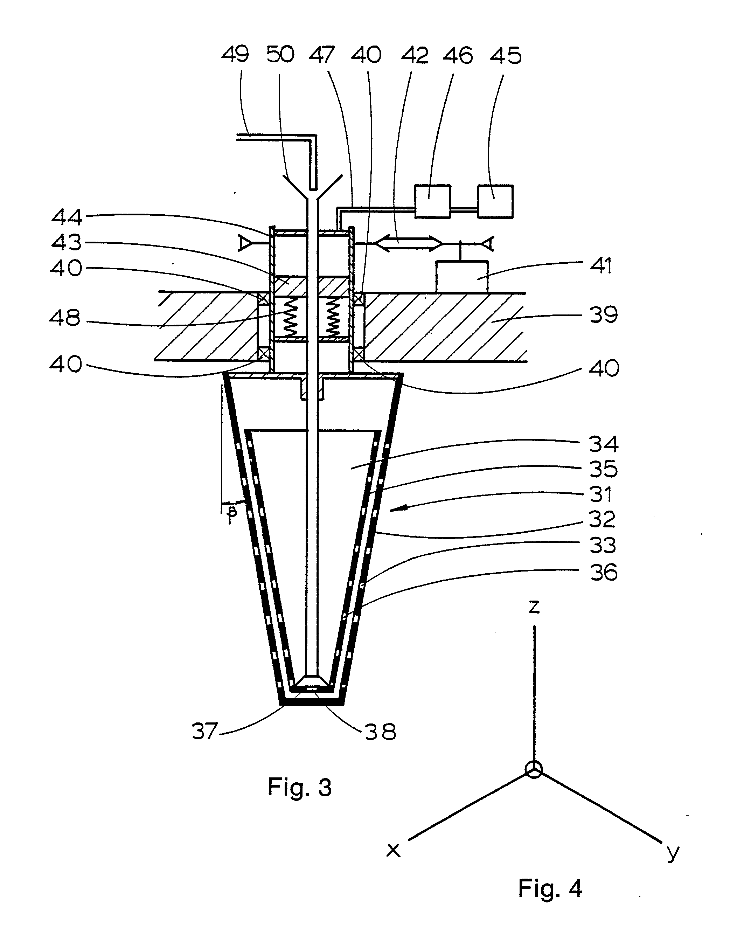

In figure 3 an embodiment is represented the body and element of which have a relatively sharp vertex angle. This type has half a vertex angle $\beta$ between 35 and 10¤ with the z-axis. Owing to the pointed shape such a bucket requires relatively little space for it to be incorporated in and through the upper floor of a prilling tower. This type of body is suitable for a fairly large throughput, for instance 42 tonnes/h, its speed being, for instance, 150-300 rev./min. As a result the drops are flung far away.

In figure 3 31 is the body the conical wall portion 32 of which is provided with liquid outlets 33. In the body a hollow element 34 is present whose wall 35 is more or less conformal to wall portion 32 of the body. In wall 35 openings 36 are present. In bottom 37 of element 34 an opening 38 is present having a diameter equalling half the diameter of bottom 37. Using bearings 40 the body is so mounted in upper floor 39 of a prilling tower (not drawn) as to be able to rotate. The drive and transmission are indicated by 41 and 42. The element is not driven, but it can rotate round a shaft in z-direction. The element can be translated in z-direction by means of, for instnace, a hydraulic or a pneumatic piston/cylinder 43 and 44. 45 is a motor and 46 an energy converter. The driving medium is supplied through line 47 to cylinder 44. In the embodiment drawn in figure 3 piston 43 is pressed down by a compressed medium. The upward movement can be generated by a mechanical, hydraulic or pneumatic spring 48, which is compressed in the downstroke of piston 43 and pushes the piston up after removal of the pressure in cylinder 44. Springs from an elastomeric plastic can be applied also. The feed of the liquid to be sprayed is indicated by 49, which feed ends in a buffer compartment 50.

The process according to the invention is elucidated by means of the following experiments.

Experiments Series A

Experiments using the embodiment of figure 1.

Data regarding the sprayed liquid:

|  | A | B | C |
|---|---|---|---|
| Nature of material : | urea | ammonium nitrate | water |
| concentration % | 95-100 | 95-100 | 100 |
| specific mass : kg/m3 (in melted state) | 1320 | 1420 | 1000 |
| viscosity $\eta$ cP at t ¤C | $1 < \eta < 5$ 135¤C | $3 < \eta < 10$ 175¤C | c. 1 25¤C |
| temperature: ¤C | 135-140 | 175-180 | ambient temp. |
| pressure in body (over the liquid) | atmospheric | atmospheric | atmospheric |

Constructional data regarding the body and the element

Bodies I up to and including V all have the same configuration as indicated in figure 1.

|                                    | I   | II  | III | IV  | V                        |
| ---------------------------------- | --- | --- | --- | --- | ------------------------ |
| **Body**                           |     |     |     |     |                          |
| diameter (average)      mm         |     |     |     |     |                          |
| diameter (bottom plane) mm         |     |     |     |     |                          |
| vertex angle                       | 0-40 | 0-40 | 0-40 | 0-40 | 0-40                    |
| Outlets:                           |     |     |     |     |                          |
| – number                           |     |     | 136 | 300 | 900                      |
| – diameter              mm         |     |     | 1.3 | 1.1 | 1.1 up to and including 1.7; 0.1 increasing |
| – direction in respect of z-axis   |     |     |     |     |                          |
| Movability:                        |     |     |     |     |                          |
| – translation x-y direction        | no  | no  | no  | no  | no                       |
| – translation z-direction          | yes | yes | yes | yes | yes                      |
| – rotation round z-axis            | no  | no  | yes | yes | yes                      |
| **Element**                        | no  | no  | yes | yes | yes                      |
| movability:                        |     |     |     |     |                          |
| – translation x-y direction        | –   | –   | no  | no  | no                       |
| – translation z-direction          | –   | –   | yes | yes | yes                      |
| – rotation round z-axis            | –   | –   | yes | yes | yes                      |

In the tables:

$n$ = speed body rev/s
$f$ = frequency of motion of body (Hz)
$V_o$ = flow rate of the liquid from the outlets in the body (m/s)
$d$ = weight-average diameter of the resulting prills (mm)

$V_a$ = coefficient of variation related to the weight-average prill diameter
Cap = capacity or throughput of the sprayed liquid per hour (kg/h)
P = applied electric power input of virration generator (W).

EXPERIMENTS

Series IV C (body IV material C)

| n | f | $V_o$ | P | Cap | d* | $V_{a}$** |
|---|---|---|---|---|---|---|
| (RPM) | (Hz) | (m/s) | (W) | (kg/hr) | (mm) | (%) |
| 100 | 500 | 1.6 | 120-230 | 1800 | 1.82 | |
| 100 | 550 | 1.8 | 40-140 | 2350 | 1.98 | |
| 100 | 600 | 2.0 | 70-240 | 2000 | 1.82 | |
| | | 2.2 | ditto | 2200 | 1.83 | |
| | | 2.4 | ditto | 2350 | 1.93 | |
| 100 | 650 | 2.2 | 40-260 | 2200 | 1.82 | |
| | | 2.4 | ditto | 2350 | 1.87 | |
| 100 | 700 | 2.0 | 20-110 | 2100 | 1.76 | |
| | | 2.2 | ditto | 2350 | 1.82 | |
| | | 2.4 | ditto | 2500 | 1.87 | |

Series III C (body III, material C)

| n (RPM) | f (Hz) | $V_o$ (m/s) | P (W) | Cap (kg/hr) | d* (mm) | Va** (%) |
|---|---|---|---|---|---|---|
| 100 | 400 | 2.2 | 70-180 | 1510 | 2.45 | |
| | | 2.4 | ditto | 1600 | 2.49 | |
| 100 | 450 | 1.6 | 20-200 | 1050 | 3.09 | |
| | | 2.0 | ditto | 1330 | 2.27 | |
| | | 2.6 | ditto | 1685 | 2.44 | |
| 100 | 500 | 1.8 | 20-240 | 1200 | 2.11 | |
| | | 2.2 | ditto | 1510 | 2.27 | |
| | | 2.6 | ditto | 1685 | 2.36 | |
| 100 | 550 | 1.8 | 20-220 | 1200 | 2.04 | |
| | | 2.2 | ditto | 1510 | 2.20 | |
| | | 2.6 | ditto | 1685 | 2.28 | |
| 100 | 600 | 2 | 30-220 | 1330 | 2.06 | |
| | | 2.2 | ditto | 1510 | 2.14 | |
| | | 2.6 | ditto | 1685 | 2.22 | |
| 100 | 650 | 2.2 | 30-220 | 1510 | 2.08 | |
| | | 2.4 | ditto | 1600 | 2.12 | |
| | | 2.6 | ditto | 1685 | 2.16 | |
| 100 | 700 | 2.2 | 60-240 | 1510 | 2.03 | |
| | | 2.6 | ditto | 1685 | 2.40 | |
| | 750 | 2.6 | 70-240 | 1685 | 2.06 | |

\*   d is here the diameter of the drops

\*\*  $V_a$ cannot be determined because there is no formation of (solidified) prills (water drops !)

Series V A (body V, material A)

| n (RPM) | f (Hz) | $V_o$ (m/s) | P (W) | Cap (kg/hr) | d (mm) | $V_a$ (%) |
|---|---|---|---|---|---|---|
| | | | | | | |
| diameter outlets: 1.3 mm | | | | | | |
| 100 | 400 | 1.66 | 60-140 | 6700 | 1.96 | 6.1 |
| | | 2.33 | ditto | 9600 | 2.20 | 6.2 |
| 100 | 450 | 2.00 | 60-140 | 8300 | 1.82 | 6.1 |
| | | 2.14 | ditto | 8700 | 2.05 | 6.0 |
| | | 2.33 | ditto | 9600 | 2.11 | 6.0 |
| 100 | 500 | 2.33 | 60-140 | 9600 | 1.98 | 6.9 |
| | | 2.92 | ditto | 12000 | 2.20 | 6.6 |
| 100 | 550 | 2.33 | 60-140 | 9600 | 1.97 | 6.9 |
| | | 2.41 | ditto | 10000 | 2.00 | 6.3 |

Series V B(body V, material B)

| n (RPM) | f (Hz) | $V_o$ (m/s) | P (W) | Cap (kg/hr) | d (mm) | $V_a$ (%) |
|---|---|---|---|---|---|---|
| | | | | | | |
| diameter outlets: 1.1 mm | | | | | | |
| 100 | 400 | 1.56 | 100-180 | 6800 | 1.92 | 5.6 |
| 100 | 500 | 2.34 | ditto | 10000 | 1.92 | 5.7 |
| 100 | 700 | 1.95 | ditto | 8300 | 1.82 | 5.8 |
| diameter outlets: 1.2 mm | | | | | | |
| 100 | 400 | 1,31 | 100-180 | 6800 | 1,92 | 6,1 |
| 100 | 500 | 1,64 | idem | 8300 | 1,92 | 5,8 |

Series V B (body V, material B, continued)

| n<br>(RPM) | f<br>(Hz) | Vo<br>(m/s) | P<br>(W) | Cap<br>(kg/hr) | d<br>(mm) | $V_a$<br>(%) |
|---|---|---|---|---|---|---|

diameter outlets: 1.3 mm

| 100 | 300 | 1.12 | 100–180 | 6800 | 2.11 | 6.7 |
| 100 | 500 | 1.68 | ditto | 10000 | 2.04 | 6.9 |
| 100 | 600 | 2.23 | ditto | 13300 | 2.11 | 7.0 |
| 100 | 700 | 2.51 | ditto | 15000 | 2.09 | 6.2 |

diameter outlets: 1.4 mm

| 100 | 250 | 1.40 | 100–180 | 9700 | 2.57 | 6.2 |
| 100 | 400 | 1.69 | ditto | 11700 | 2.31 | 6.2 |
| 100 | 500 | 2.17 | idem | 15000 | 2.25 | 6.2 |

diameter outlets: 1.5 mm

| 100 | 170 | 1.02 | 100–180 | 8100 | 2.75 | 6.7 |
| 100 | 400 | 2.10 | ditto | 16700 | 2.60 | 6.1 |
| 100 | 500 | 1.68 | ditto | 13300 | 2.25 | 6.2 |

diameter outlets: 1.6 mm

| 100 | 300 | 1.29 | 150–240 | 11700 | 2.66 | 5.9 |
| 100 | 400 | 2.21 | ditto | 20000 | 2.77 | 6.1 |
|  |  | 2.58 | ditto | 23300 | 2.92 | 6.4 |
| 100 | 500 | 2.58 | idem | 23000 | 2.71 | 6.2 |

Series V B (body V, material B, continued)

| n (RPM) | f (Hz) | $V_o$ (m/s) | P (W) | Cap (kg/hr) | d (mm) | $V_a$ (%) |
|---|---|---|---|---|---|---|
| diameter outlets: 1.7 mm | | | | | | |
| 100 | 300 | 1.63 | 150-250 | 16700 | 2.87 | 6.2 |
| | | 2.45 | ditto | 25000 | 3.28 | 6.5 |
| 100 | 400 | 1.96 | 150-250 | 20000 | 2.77 | 6.1 |
| | | 2.12 | ditto | 21700 | 2.84 | 6.2 |
| | | 2.45 | ditto | 25000 | 2.98 | 6.3 |

The experiments show that, with different capacities (using the same body), the weight-average prill diameter can be kept at a constant value by adjusting the frequency of motion and also that by adjusting the frequency a desired prill diameter can be obtained while the capacity remains the same.

The experiments show the flexibility in process operation of the process according to the invention.

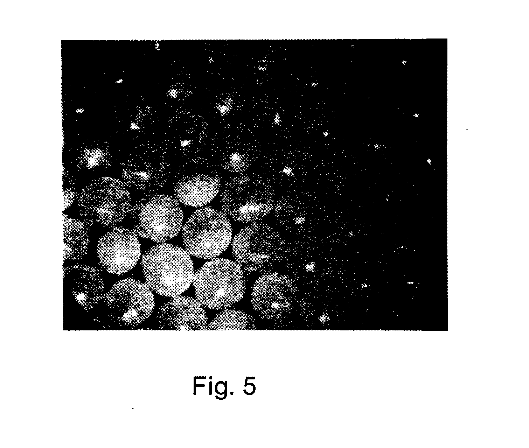

Figure 5 is a photographic representation of the prills obtained in one of the experiments of series VB.

Experiments series B

Experiments using the embodiment of Figure 3.

Data regarding the liquid sprayed:

| | A | B | C |
|---|---|---|---|
| Nature of the substance | urea | ammonium nitrate | water |
| concentration % (by weight) | 95-100 | 95-100 | 100 |
| specific mass: $kg/m^3$ (in melted state) | 1210 | 1437 | 1000 |
| viscosity $\eta$     cP (....:t) | $1 < \eta < 5$ at 135¤C | $3 < \eta < 10$ 175¤C | c. 1 25¤C |
| temperature: | 135-140 | 175-180 | ambient temp. |
| pressure in body (above the liquid) | atmospheric | atmospheric | atmospheric |

Data regarding the design of the body and the element

Bodies I′ and I″ are embodiment variants of body I as represented in figure 3.

| body | I' | I" |
|---|---|---|
| diameter (average) mm | 170 | 380 |
| diameter (bottom plane) mm | 115 | 300 |
| vertex angle | 13.6 | 24 |
| outlets | | |
| – number | 200 | 4900 |
| – diameter mm | 1.41 | 1.30 |
| movability: | | |
| – translation x–y–direction | no | no |
| – translation z–direction | yes | no |
| – rotation round z–axis | yes | yes |

| element (in combination with the body with the same designation) | I' | I" |
|---|---|---|
| diameter (average) mm | 150 | 370 |
| diameter (bottom plane) mm | 85 | 280 |
| vertex angle | 13.6 | 24 |
| discharge openings | | |
| - number | 200 | 2500 |
| - diameter mm | 1.8 | 2.0 |
| movability: | | |
| - translation x-y-direction | no | no |
| - translation z-direction | no | yes |
| - rotation round z-axis | yes | yes |

## Experiments

Body I', liquid A

| Experiment No. | I'A 1 | I'A 2 (comparative example |
|---|---|---|
| throughput t/h | 1.99 | 1.99 |
| body: | | |
| - speed rev./min. | 200 | 200 |
| - translation z-direction | yes | no |
| - phase | 0 | - |
| - frequency Hz | 450 | - |
| element: | | |
| - speed rev./min. | 200 | 200 |
| - translation in z-direction | no | no |
| - frequency Hz | - | - |
| average prill diameter mm | 2.15 | 2.44 |
| coefficient of variation % | ◀ 5 | 25 |

13

Body I", Liquids A and B

| experiment no. | I''A 1 | I"A 2 | I"B 1 | I"B 2 (comp. ex., element removed) |
|---|---|---|---|---|
| Throughput t/h | 31 | 42 | 37.5 | 37.5 |
| body: | | | | |
| – speed rev./min. | 140 | 150 | 200 | 200 |
| – translation in z-direction | no | no | no | no |
| – frequency Hz | 0 | 0 | 0 | 0 |
| element: | | | | not present |
| – speed rev./min. | 140 | 150 | 200 | not applicable |
| – translation in z-direction | yes | yes | yes | not applicable |
| – frequency Hz | 400 | 550 | 250 | not applicable |
| average prill diameter mm | 1.90 | 1.90 | 2.23 | 2.26 |
| coefficient of variation % | < 5 | < 5 | < 5 | 25 |

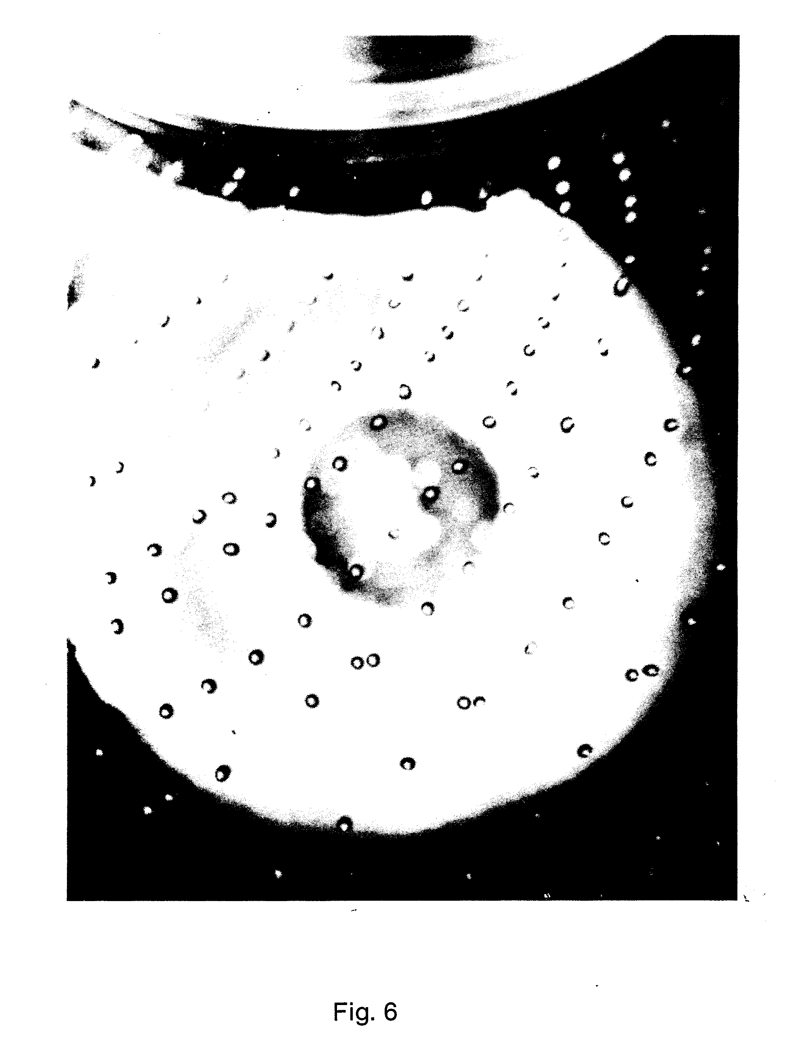

The process according to the invention is further elucidated with reference to figures 6 up to and including 9.

Figure 6 is a print from a photographic negative of the distribution of the drops of the sprayed liquid - (water) with a body rotating at a rotational frequency of 200 rev./min., the element of which was periodically moved to and fro in z-direction at a frequency of 200 Hz.

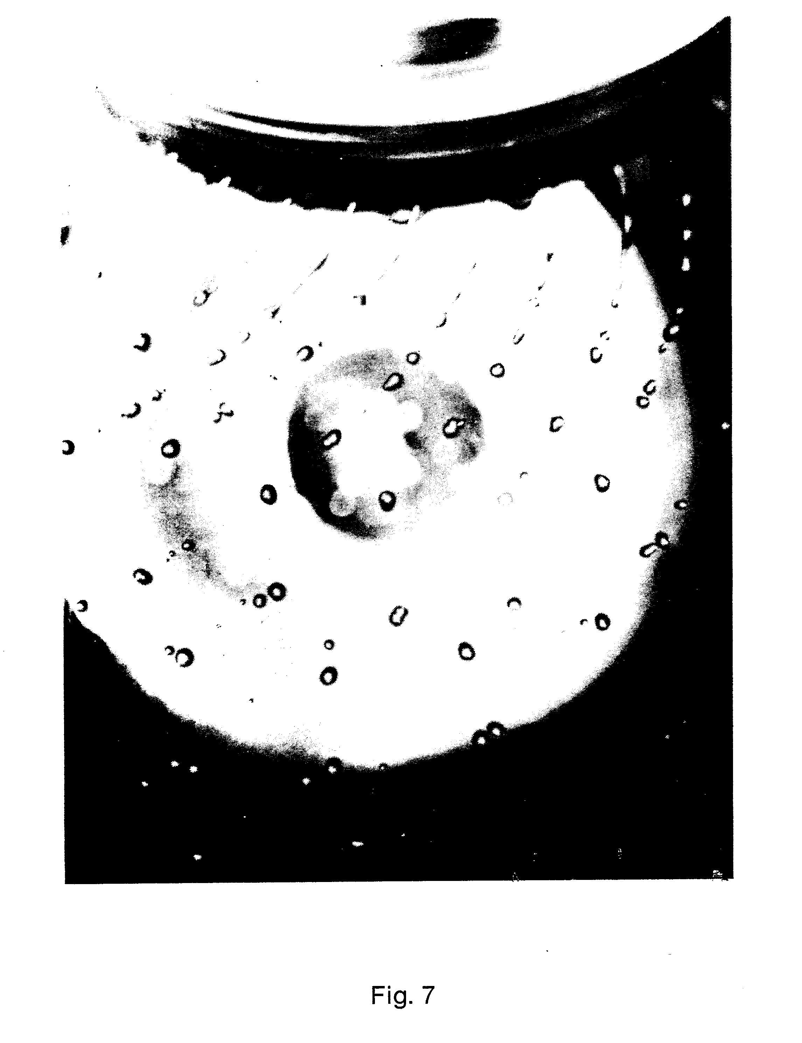

Figure 7 gives a picture of the distribution of the drops obtained with the same device, in which the body was rotated also round the z-axis at a rotationl frequency of 200 rev./min., but from which the element has been removed. It should be noted that by applying scale rules buckets of different dimensions can yet be compared in terms of process conditions.

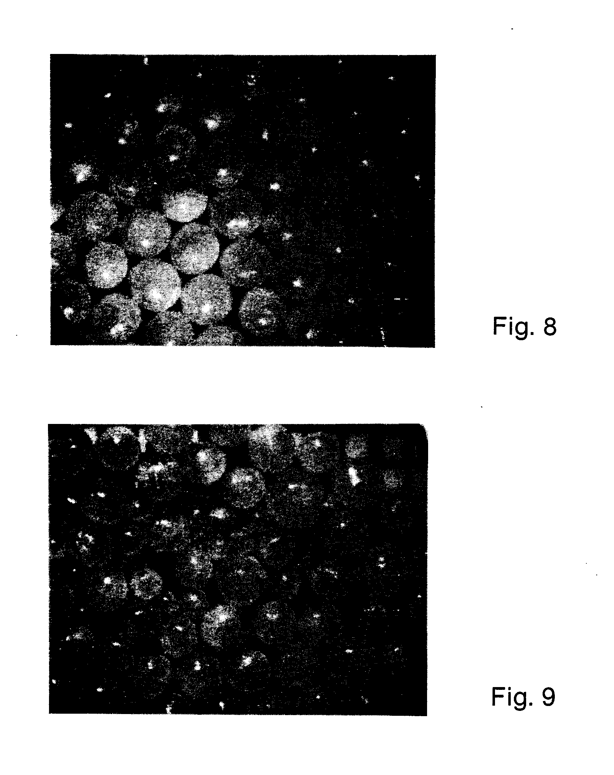

Fig. 8 is a photographic representation of the prills obtained in experiment no. I'A 1 and Fig. 9 is a photographic representation of the prills obtained in comparative experiment I'A 2.

**Claims**

1. Process for distributing a liquid in a gaseous medium, in which process the liquid is introduced into a hollow body having a number of identical outlets, provided rotation-symmetrically relative to a vertical axis, and in which process an element is present in the hollow of the body, which element is at least partly in contact with the liquid and is moved up and down in a direction parallel to the vertical axis, this process being characterized in that at least the part of the body that is provided with outlets is moved up and down in a direction parallel to the vertical axis, the frequency f of said movement being equal to the product of a proportionality constant k and the quotient of the average flow rate of the liquid through the outlets of the body and the diameter d of an outlet, in which k is between 0.25 and 0.5, f is expressed in vibrations per second, v in metres per second and d in metres.

2. Process according to either claims 1 and 2, characterized in that the movements of the body and the element are the same and in phase.

3. Process according to any of the preceding claims, characterized in that the element is moved in rotation around the vertical axis at a speed of rotation that is between 0.5 and 3 rev/s.

4. Process for distributing a liquid in a gaseous medium, in which process the liquid is introduced into a hollow body having a number of identical outlets, provided rotation-symmetrically relative to a vertical axis, and in which process an element is present in the hollow of the body, which element is at least partly in contact with the liquid and is moved up and down in a direction parallel to the vertical axis, this process being characterized in that the body is moved around the vertical axis at a frequency f that is equal to the product of a proportionality constant k and the quotient of the average flow rate of the liquid through the outlets of the body and the diameter d of an outlet, k being between 0.25 and 0.5, f being expressed in vibrations per second, v in metres per second and d in metres.

5. Process according to claim 1 or 2, characterized in that the frequency of movement of the body and that of the element are the same.

6. Process according to any of claims 1, 2, 4 or 5, characterized in that the body is moved in rotation around the vertical axis at a speed of rotation that is between 0.5 and 6 rev/s.

7. Process according to any one of claims 1, 2 or 4-6, characterized in that the body makes a periodical movement in the horizontal plane.

8. Process according to claim 7, characterized in that the periodical movement in the horizontal plane consists of a single vibration in one direction perpendicular to the vertical axis.

9. Process according to claim 7, characterized in that the periodical movement in the horizontal plane consists of a compound vibration consisting of two single vibrations according to two different directions in the horizontal plane.

10. Process according to claim 2, characterized in that the two directions in the horizontal plane enclose a right angle.

11. Process according to any of claims 4-10, characterized in that the body moves up and down in the direction of the vertical axis.

12. Process according to any of claims 4-10, characterized in that the element is moved in rotation around the vertical axis at a speed of rotation that is between 0.5 and 3 rev/s.

13. Process according to any of claims 1-12, characterized in that the element makes a periodical movement in the horizontal plane.

14. Product obtained by the process according to any of claims 1-13.

15. Device for distributing a liquid in a gaseous medium, comprising a hollow body having at least one liquid inlet and a number of liquid outlets, which are identical and have been provided rotation-symmetrically relative to a vertical axis in the wall of the body, and an element provided in the hollow of the body, the body and the element having a rotationg-symmetrical shape, this device being characterized in that the body and the element substantially are similar in shape and are positioned symmetrically relative to the vertical axis.

16. Device according to claim 15, characterized in that the body and the element have a conical part, with a bottom plate provided with outlets, and in that the liquid is supplied through the hollow in the element.

17. Device according to either claim 15 or claim 16, characterized in that the body is provided with a bottom plate that bulges outwards.

18. Device according to either of claims 16 and 17, characterized in that the bottom plates of the body and the element are interconnected.

19. Device according to any of claims 15-18, characterized in that the wall of the body is provided with outward bulges at the locations of the liquid outlets.

20. Device for distributing a liquid in a gaseous medium, comprising a hollow body having at least one liquid inlet and a number of liquid outlets, which are identical and have been provided rotation-symmetrically relative to a vertical axis in the wall of the body, and an element provided in the hollow of the body, the body and the element having a rotation-symmetrical shape, this device being characterized in that the body and the element are in the main similar in shape and have been provided symmetrically relative to the vertical axis.

Fig. 1

Fig. 2

Fig. 3

Fig. 4

Fig. 5

Fig. 6

Fig. 7

Fig. 8

Fig. 9